Europäisches Patentamt

European Patent Office

Office européen des brevets

(11) Veröffentlichungsnummer : **0 208 804**
**B1**

(12) # EUROPÄISCHE PATENTSCHRIFT

(45) Veröffentlichungstag der Patentschrift :
30.11.88

(21) Anmeldenummer : 85109075.3

(22) Anmeldetag : 19.07.85

(51) Int. Cl.⁴ : **B 65 D 30/04**, B 65 D 85/60

(54) **Verfahren zur Herstellung einer dekorativen Verpackung und Verpackung hergestellt nach dem Verfahren.**

(43) Veröffentlichungstag der Anmeldung :
**21.01.87 Patentblatt 87/04**

(45) Bekanntmachung des Hinweises auf die Patenterteilung : **30.11.88 Patentblatt 88/48**

(84) Benannte Vertragsstaaten :
**BE CH DE FR IT LI LU NL**

(56) Entgegenhaltungen :
**FR-A- 2 118 737**
**FR-A- 2 306 397**
**US-A- 2 096 161**
**US-A- 2 826 225**

(73) Patentinhaber : **Bandfabrik Breitenbach AG**
**CH-4226 Breitenbach (CH)**

(72) Erfinder : **Hagenbuch, Ernst**
**Ollenweg 15**
**D-4226 Breitenbach (DE)**

(74) Vertreter : **Liermann, Manfred**
**Josef-Schregel-Strasse 19**
**D-5160 Düren (DE)**

EP 0 208 804 B1

**Beschreibung**

Die Erfindung betrifft ein Verfahren zur Herstellung einer dekorativen Verpackung aus Textilband zur Aufnahme mehrerer einzelner Gegenstände, wobei die Verpackung ein mindestens einseitig offenes Säckchen aus Textilband enthält.

Weiterhin betrifft die Erfindung ein Textilband als Zwischenerzeugnis des erfindungsgemäßen Verfahrens sowie eine nach dem eingangs beschriebenen Verfahren hergestellte dekorative Verpackung.

Ein Verfahren der eingangs beschriebenen Art ist aus der Praxis bekannt. Es werden danach flache Textilbahnen zu Rohrstücken zusammengelegt und in Längsrichtung zu einem Röhrchen vernäht. Dieses Röhrchen wird darüber hinaus an dem einen offenen Ende vernäht, so daß hierdurch ein Säckchen aus Textilband entstanden ist. Dieses Säckchen aus Textilband dient nun als Behälter für die einzelnen Gegenstände und kann mit weiteren Dekorationsbändern versehen werden. Eine dekorative Schleife verschließt dieses Säckchen. Es wird also ein als Zwischenprodukt dienendes flaches Gewebe oder auch eine Gewebebahn in Stücke geschnitten und diese Stücke zu einem Rohr zusammengelegt und längs vernäht. Hierdurch ist ein weiteres Zwischenprodukt entstanden, nämlich das Röhrchen, das nun in einem nächsten Schritt an einem offenen Ende vernäht werden muß, damit es geschlossen ist. Es kann dann gefüllt und mit einer dekorativen Schleife verschlossen werden, wodurch die gewünschte Verpackung entstanden ist.

In der nicht vorveröffentlichten schweizerischen Patentanmeldung Nr. 085/85-8 vom 9. Januar 1985 wird eine dekorative Verpackung für verschiedene kleinere Gegenstände, wie beispielsweise Dragees, Pralinees oder ähnliche Produkte beschrieben, bei welcher die Gegenstände zwischen zwei Teilbänder geschoben werden, wobei die Teilbänder mittels zwei Zugorganen zusammengebunden werden, so daß halbkreisförmige Beutel entstehen. Solche Erzeugnisse werden vielfach mit einer Anhängeetikette mit einem Aufdruck versehen.

Der Erfindung liegt die Aufgabe zugrunde, ein Verfahren zur Herstellung einer preisgünstigen und dekorativen Verpackung sowie eine hiernach hergestellte Verpackung ebenso wie ein für die Herstellung solcher Verpackungen geeignetes Textilband vorzuschlagen. Hierbei soll gleichzeitig die Verfüllung der Verpackung und das Verschließen der Verpackung einfach sein und es sollen die Anhängeetiketten entbehrlich werden.

Verfahrensmäßig wird die der Erfindung zugrundeliegende Aufgabe ausgehend von einem Verfahren der eingangs beschriebenen Art dadurch gelöst, daß von mindestens zwei miteinander verbundenen Textilbändern, von denen mindestens das eine hohl gewoben wird und mindestens das andere von Fasermaterial und Webstruktur für eine Beschriftung geeignet ist oder eingearbeitete Zeichen oder Schriftzüge enthält, wobei mindestens das hohl gewobene Band in Längsabständen quer verklebt, verschweißt, abgebunden oder vernäht und hinter diesen Querunterteilungen das gesamte Band quer getrennt wird. Dies ist ein besonders einfaches Verfahren zur Herstellung solcher Verpackungen, denn es wird die Grundform der Verpackung in Endlosfertigung gefertigt und es bedarf nur der Quertrennung, um die für eine Verfüllung bereite Verpackung zu erhalten. Es ist sogar möglich, diese Quertrennung in dem Betrieb, der die Verfüllung der Verpackungen vornimmt, ebenfalls vorzunehmen, so daß die Verpackungen als Endlosband angeliefert werden können. Die Verfüllung kann dann maschinell vom endlos zugeführten Band derart erfolgen, daß immer das vorderste Ende des Endlosbandes verfüllt, mit einer dekorativen Schleife oder ähnlichem verschlossen und vom Endlosband getrennt wird. Hierdurch gelingt es, die Verpackung selbst billiger herzustellen, günstig in großen Mengen zu transportieren, und es wird die Verfüllung vereinfacht.

Nach einer Ausgestaltung der Erfindung ist noch vorgeschlagen, daß mindestens zwei Textilbänder hohl gewoben und in Längsrichtung mit einem dazwischenliegenden weiteren Textilband verbunden werden. Hierdurch kann ohne nennenswerte Veränderung der Produktionskosten eine vielfach gewünschte Doppelverpackung mit allen bereits beschriebenen Vorteilen hergestellt werden.

Es ist weiterhin nach der Erfindung vorgesehen, daß das weitere Textilband im Mittenbereich in Längsrichtung geteilt wird. Hierdurch besteht die Möglichkeit, aus den bereits genannten Doppelverpackungen Einzelverpackungen herzustellen. Gleichzeitig gelingt es hierdurch den Herstellungsaufwand auf solche Maßnahmen zur Herstellung von Doppelverpackungen zu beschränken, weil ja die Doppelverpackungen auf einfache Weise wieder zu Einzelverpackungen gemacht werden können.

Es ist weiterhin nach der Erfindung vorgesehen, daß mit dem hohl gewobenen Textilband zwei sich diametral gegenüberliegende Bänder verbunden werden. Hierdurch wird ohne nennenswerte Veränderung des Herstellaufwandes eine Variationsmöglichkeit der dekorativen Verpackung geschaffen.

Es ist nach der Erfindung noch vorgeschlagen, daß die Verbindung der Textilbahnen untereinander durch Verschweißen, Verkleben, Vernähen oder Verweben hergestellt wird. Auf diese Art und Weise gelingt es — was mitunter vorteilhaft sein kann — die Einzelkomponenten der Verpackung einzeln herzustellen und diese Einzelkomponenten bei Bedarf anderen Zwecken zuzuführen oder aber in der Produktion zusammenzuführen und miteinander zu verbinden. Hierdurch kann eine weitere Kostensenkung erreicht werden.

Auch ist nach der Erfindung vorgeschlagen, daß in mindestens einem der Textilbänder in Längsrichtung ein Zugorgan eingearbeitet wird, auf dem das Band wenigstens teilweise verschiebbar ist. Hierdurch lassen sich auf einfache Art und Weise die jeweiligen Teilstücke nach ihrer Trennung über die Zugorgane zu Rosetten oder rosettenähnlichen Verpackungen zusammenformen.

Weiter ergänzend wird noch vorgeschlagen, daß mehrere Zugorgane an solchen Stellen eingewebt werden, daß sie bei flachgelegtem Band alle in einer Ebene liegen. Hierdurch wird sowohl die Fertigung als auch die Handhabung vereinfacht.

Eine ergänzende Ausgestaltung der Erfindung sieht vor, daß der hohl gewobene Bandteil entlang einem Zugorgan abwechselnd geöffnet und geschlossen gewebt wird. Auch dies ist eine relativ einfache Webmethode, mit der es gelingt ein Endlosband zu weben, das nach Queraufteilung in Einzelstücke über die Zugbänder rosettenähnlich zusammmgefaßt werden kann und quer über die geöffnet gewebten Stellen gefüllt werden kann. Es ist bei einer solchen Machart sogar möglich, auf die in Längsabständen vorgenommenen Querunterteilungen zu verzichten. Bei Formung einer über die geöffnet gewebten Stellen verfüllten Rosette sind geschlossene Enden, wie sie durch die Querunterteilungen erreicht wurden, nicht zwingend notwendig.

Weiterhin wird nach der Erfindung vorgeschlagen, daß das Zugorgan durch den geöffneten Kantenbereich des hohl gewobenen Bandteils geführt wird. Hierdurch wird der Kantenbereich einerseits verstärkt und es gelingt mit dem Zusammenziehen zur Bildung beispielsweise einer Rosette den Öffnungsbereich zu verengen.

Ergänzend ist noch vorgesehen, daß die Öffnungen entlang der Verbindungslinie zwischen hohl gewobenem und nicht hohl gewobenem Bandteil eingearbeitet werden. Hierdurch wird einerseits die Herstellung des Bandes und andererseits die spätere Verfüllung des Bandes vereinfacht.

Als ein nach dem erfindungsgemäßen Verfahren hergestelltes Ausgangsprodukt zur Erzeugung der gewünschten dekorativen Verpackung wird nach der Erfindung ein Textilband vorgeschlagen, daß gekennzeichnet ist durch mindestens zwei miteinander verbundene Textilbänder, wobei mindestens ein Textilband hohl gewoben ist und wobei mit jedem hohl gewobenen Textilband ein weiteres Textilband verbunden ist, das von Fasermaterial und Webstruktur für eine Beschriftung oder Bedruckung geeignet ist oder eingearbeitete Zeichen oder Schriftzüge enthält.

Weitere vorteilhafte Ausgestaltungen und Variationen dieses erfindungsgemäßen Textilbandes können den Ansprüchen 12 bis 26 entnommen werden.

Schließlich wird nach der Erfindung noch eine dekorative Verpackung, hergestellt nach dem erfindungsgemäßen Verfahren unter Verwendung des bei dem Verfahren hergestellten Textilbandes, vorgeschlagen, mit einem Aufnahmebehälter für mehrere einzelne Gegenstände, bei der die Verpackung aus durch Querteilung des Textilbandes nach mindestens einem der Ansprüche 11 bis 26 gewonnenen Einzelstücken erzeugt ist, wobei ein Ende jedes hohl gewobenen Textilbandes dauerhaft verschlossen sein kann zur Erzeugung eines Aufnahmebehälters oder wobei das gewonnene Einzelstück über mindestens ein Zugorgan zu einem rosettenähnlichen Körper zur Erzeugung eines Aufnahmebehälters geformt ist. Hierbei können dann die bei den Unterteilungsstellen quergeteilten Textilbahnen noch mit einem Aufdruck oder einer Beschriftung versehen sein.

Die Erfindung soll nun anhand einiger Ausführungsbeispiele näher erläutert werden.

Es zeigen :

Figur 1 : Ausführungsform mit einem Hohlband und einem flachen Teil zum Beschriften

Figur 2 : Band, bei welchem zwei hohle Textilbahnen mit einer mittleren Bahn verbunden sind.

Figur 3 : Hohlband mit zwei Textilbahnen in sich diametral gegenüberliegender Anordnung

Figur 4 : Gefüllte Verpackung in Ansicht

Figur 5 : Ausführungsform wie Figur 1, jedoch mit Taschen und Zugorgan

Figur 6 : Variante einer gefüllten Verpackung in Draufsicht

Figur 7 : Variante einer Ausführungsform nach Figur 5.

Die Zeichnungen 1 bis 3 zeigen im wesentlichen Stücke des nach dem erfinderischen Verfahren als Zwischenprodukt entstehenden Textilbandes, wobei diese Zwischenstücke in ihrer Länge der Unterteilungslänge dieses Textilbandes entsprechen.

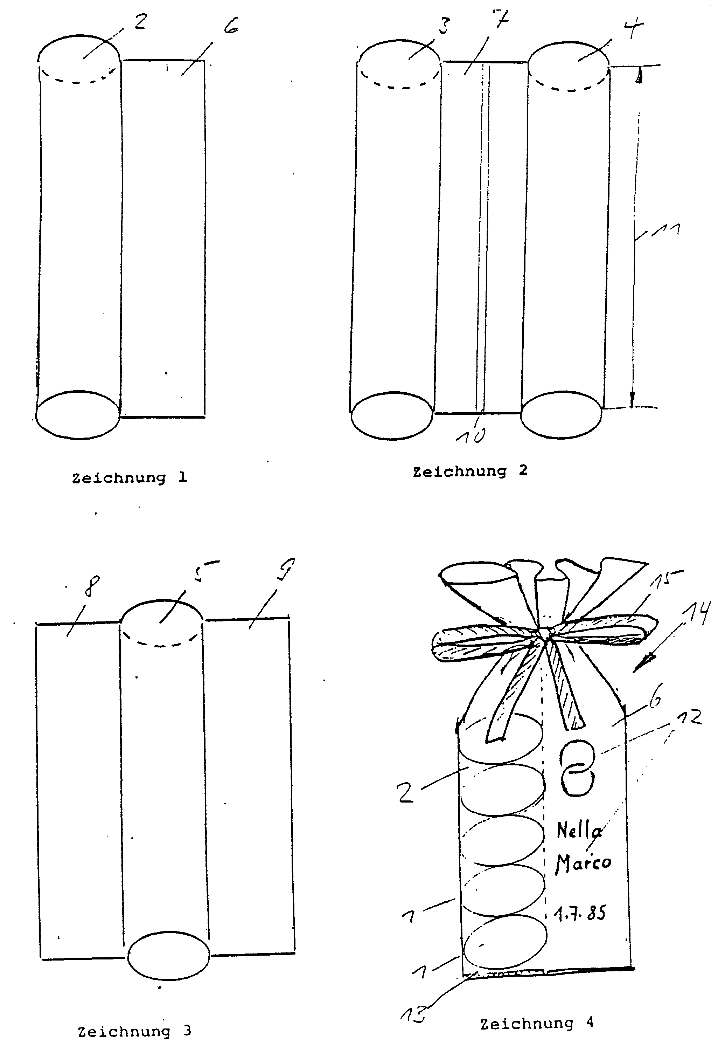

Zeichnung 1 (Figur 1) zeigt eine erste Ausführungsform eines solchen Textilbandes. Es ist dort ein hohl gewobenes Textilband 2 mit einem Textilband 6 in flacher Ausführung geradlinig in Längsrichtung verwoben. Eine solche Ausführung kann in Endlosfertigung hergestellt werden.

Zeichnung 3 (Figur 3) zeigt eine der Ausführungsform nach Zeichnung 1 ganz ähnliche Ausführung. Bei der Ausführungsform nach Zeichnung 3 ist jedoch einem hohl gewobenen Textilband 5 in sich diametral gegenüberliegender Anordnung jeweils ein flach gewobenes Textilband 8 bzw. 9 zugeordnet, wobei diese Textilbänder 8 und 9 mit dem hohl gewobenen Textilband 5 wiederum verwebt sind. Auch diese Ausführungsform ist selbstverständlich in Längsrichtung endlos herstellbar.

Eine weitere Ausführungsform ist in Zeichnung 2 (Figur 2) gezeigt. Nach dieser Ausführungsform sind zwei hohl gewobene Textilbänder 3 und 4 mit einem dazwischenliegenden Textilband 7 in flacher Ausführung in Längsrichtung verwoben. Auch diese Ausführungsform kann selbstverständlich in Längsrichtung endlos hergestellt sein. Die Ausführungsform nach Zeichnung 2 ist entweder in der dargestellten Anordnung im Längsabstand 11 unterteilbar und weiter verarbeitbar oder aber bei Bedarf im mittleren Bereich 10 längs teilbar, so daß durch diese Teilung wieder eine Ausführungsform nach Zeichnung 1 entsteht.

Es ist weiterhin möglich, das hohl gewobene Textilband 2, 3, 4, 5 unabhängig von dem flach gewobenen Textilband 6, 7, 8, 9 herzustellen, wobei hierbei auch unterschiedliche Materialien verwand werden können. Nachträglich können dann hohl gewobene Textilbänder und flach gewobene Textilbänder zusammengeführt und in geeigneter Weise, z. B. durch verschweißen, verkleben oder vernähen, miteinander verbunden werden.

Die flach gewobenen Textilbänder 6, 7, 8, 9 können hierbei für dekorative Aufdrucke oder Beschriftungen verwendet werden und machen die bisher verwendeten Anhängeetiketten mit entsprechenden Aufdrucken überflüssig.

Die Webstruktur ist vorzugsweise durchsichtig, so daß der verpackte Inhalt erkennbar ist. Hierbei können die hohl gewebten Textilbänder und die anderen Textilbänder von unterschiedlicher Beschaffenheit sein. Dies betrifft sowohl die Webstruktur als solche, als auch die Art der verwendeten Materialien. So können z. B. durchaus Tüllbänder mit Taftbändern oder Satinbändern zusammen verarbeitet sein.

Es ist auch möglich die genannten Textilbänder auf hierfür geeigneten Raschel- oder Strickmaschinen herzustellen.

Sind nun diese Textilbänder, bestehend aus den hohl gewobenen Textilbändern und den flach gewobenen Textilbändern endlos angefertigt, so werden sie — während der Anfertigung oder nachträglich — im Längsabstand 11 quer mindestens im Bereich des hohl gewobenen Textilbandes abgebunden, vernäht, verklebt oder in sonstiger geeigneter Weise dauerhaft verschlossen. Jeweils hinter dieser Verschlußstelle wird dann das Textilband quer getrennt, beispielsweise durch Abschneiden, so daß kleine Säcke entstehen, bestehend auch dem hohl gewobenen Textilband, daß so an einem Ende 13 dauerhaft verschlossen ist und das am anderen Ende — weil ja dort die Schnittstelle hinter der Verschlußstelle lag — offen ist. Hieraus läßt sich dann eine Verpackung 14 herstellen, bei der das Textilband 6 nachträglich in beliebiger Weise beschriftet oder bedruckt wird, oder wobei in dieses Textilband 6 bereits bei der Fertigung gewünschte Zeichen eingewebt, eingewirkt oder in sonstiger Weise eingebracht oder aufgebracht sind. Die fertige Verpackung 14 kann dann als solche, wenn auch noch ohne Dekorationsschleife 15, in der Fertigungsstätte des Textilbandes bereits hergestellt, also auch erst an der Stelle, an der die Verpackung 14 verfüllt werden soll, hergestellt werden. In letzterem Fall kann das Endlostextilband geliefert werden und in Verfüllmaschinen verarbeitet werden, hierzu wird das jeweils vordere Ende des Endlosbandes von einer Fülleinrichtung beispielsweise geöffnet und mit den Gegenständen 1, beispielsweise fünf Dragees, verfüllt, mit der Dekorationsschleife 15 versehen und am Ende 13 unmittelbar hinter der dauerhaften Verschlußstelle quer getrennt. Es liegt dann eine fertige Verpackung 14 gefüllt und verschlossen vor und das Endlosband ist gleichzeitig wieder für einen neuen Verfüllvorgang bereit. Eine Umsäumung oder Umnähung des geschnittenen Textilbandendes ist nicht erforderlich.

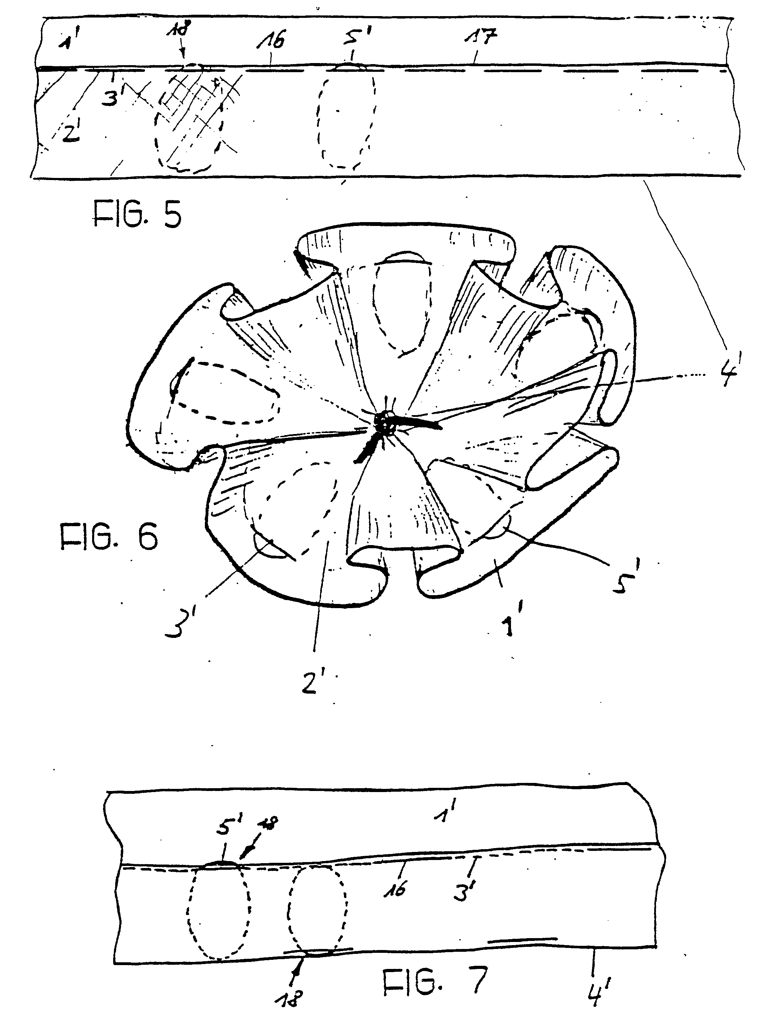

Die Ausführungsformen nach den Figuren 5 bis 7 zeigen ein erfindungsgemäßes Textilband, das nicht als Säckchen sondern beispielsweise als rosettenförmiger Behälter verwendet werden soll.

Figur 5 zeigt ein hohlgewobenes Textilband 2′, das mit einem Textilband 1′ in flacher Ausführung geradlinig in Längsrichtung verwoben ist. Eine solche Ausführung kann in Endlosfertigung hergestellt werden. Die Ausführungsform nach Figur 5 weist zwei Zugorgane 3′ und 4′ auf, von denen das Zugorgan 3′ an der Verbindungslinie 17 zwischen hohl gewobenem Textilband 2′ und Textilband 1′ in Längsrichtung eingearbeitet ist, während das Zugorgan 4′ dem Zugorgan 3′ am hohl gewobenen Textilband 2′ gegenüberliegend in Längsrichtung eingarbeitet ist. Das hohl gewobene Textilband 2′ ist entlang dem Zugorgan 3′ abwechselnd offengelassen und geschlossen gewebt. Auf diese Art und Weise entstehen quer gerichtete Öffnungen 18 im hohl gewobenen Textilband 2′, in welche die zu verpackenden Gegenstände, beispielsweise die Dragees 5′, eingefüllt werden können.

Die Ausführungsform nach Figur 7 ist ganz ähnlich der nach Figur 5, jedoch ist bei der Ausführungsform nach Figur 7 dafür gesorgt, daß die abwechselnd offen und geschlossen gewebt gelassenen Stellen, wie zu Figur 5 beschrieben, auch in gegenüberliegender Anordnung, jedoch jeweils mindestens um eine Öffnungsbreite der Öffnung 18 versetzt vorgesehen sind. Hierdurch kann das hohl gewobene Textilband 2′ von beiden Seiten radial gefüllt werden.

Sowohl im Ausführungsbeispiel nach Figur 5 als auch im Ausführungsbeispiel nach Figur 7 ist entlang der Verbindungslinie 17 das Zugorgan 3′ geführt, daß im Kantenbereich 16 der Öffnungen 18 verläuft und somit in diesem Bereich nur einen Wandteil des hohl gewobenen Textilbandes 2′ erfaßt. Auf diesem Zugorgan 3′ ist das Band mindestens bereichsweise verschiebbar.

In der Ausführungsform nach Figur 7 ist zusätzlich ein Zugorgan 4′ in einer dem Zugorgan 3′ gegenüberliegenden Anordnung vorgesehen.

Zu Bildung einer Rosette muß nun nur noch ein Teilstück des erfindungsgemäßen Textilbandes, das durch Quertrennung des Endlosbandes gewonnen wird, auf dem Zugorgan 4′ zusammengeschoben werden, wie dies Figur 6 deutlich macht. Die hierdurch überstehenden Teile des Zugorgans 4′ können dann in der Mitte verknotet werden. Mit dem weiteren Zugorgan 3′ können die Öffnungen 18 etwas verschlossen werden und bei Bedarf eine zusätzliche dekorative Kräuselung erzeugt werden. Hierbei können die genannten Zugorgane selbst elastisch sein oder elastische Fäden enthalten. An den Stellen, an denen das Endlosband nach der Erfindung quer getrennt werden soll, zur Herstellung der erfindungsgemäßen Verpackung, ist im Falle der Rosettenausführung ein mindestens einseitiger Querverschluß nicht mehr zwingend notwendig. Er kann jedoch bei besonders locker geformter Rosette noch vorteilhaft sein.

Nach der Erfindung kann somit durch Herstellung eines entsprechend gewebten Endlostextilbandes und dessen Unterteilung in einem gewünschten Längsabstand mit nachfolgender Trennung auf einfache Weise eine sehr dekorative Verpackung für die genannten Gegenstände hergestellt werden, die mit einer Dekorationsschleife nach der Verfüllung verschlossen und gleichzeitig in der dekorativen Wirkung erhöht werden kann. Die Herstellung der Verpackung selbst als auch die Verfüllung wird vereinfacht und es wird eine Anhängeetikette überflüssig.

**Patentansprüche**

1. Verfahren zur Herstellung einer dekorativen Verpackung aus Textilband zur Aufnahme mehrerer einzelner Gegenstände, wobei die Verpackung ein mindestens einseitig offenes Säckchen aus Textilband enthält, dadurch gekennzeichnet, daß von mindestens zwei miteinander verbundenen Textilbändern (2, 6 ; 3, 7, 4 ; 8, 5, 9), von denen mindestens das eine (2, 3, 4, 5) hohl gewoben wird und mindestens das andere (6, 7, 8, 9) von Fasermaterial und Webstruktur für eine Beschriftung oder Bedruckung geeignet ist oder eingearbeitete Zeichen oder Schriftzüge enthält, mindestens das hohl gewobene Band (2, 3, 4, 5) in Längsabständen (11) quer verklebt, verschweißt, abgebunden oder vernäht und hinter diesen Querunterteilungen das gesamte Band quer getrennt wird.

2. Verfahren nach Anspruch 1, dadurch gekennzeichnet, daß mindestens zwei Textilbänder (3, 4) hohl gewoben und in Längsrichtung mit einem dazwischen liegenden weiteren Textilband (7) verbunden werden.

3. Verfahren nach Anspruch 2, dadurch gekennzeichnet, daß das weitere Textilband (7) im Mittenbereich (10) in Längsrichtung geteilt wird.

4. Verfahren nach Anspruch 1, dadurch gekennzeichnet, daß mit dem hohl gewobenen Textilband (5) zwei sich diametral gegenüberliegende Bänder (8, 9) verbunden werden.

5. Verfahren nach einem der Ansprüche 1 bis 4, dadurch gekennzeichnet, daß die Verbindung der Textilbahnen (2, 6 ; 3, 7, 4 ; 8, 5, 9) untereinander durch Verschweißen, Verkleben, Vernähen oder Verweben hergestellt wird.

6. Verfahren nach einem der Ansprüche 1 bis 5, dadurch gekennzeichnet, daß in mindestens einem der Textilbänder (2', 1') in Längsrichtung ein Zugorgan (3' ; 4') eingearbeitet wird, auf dem das Band wenigstens teilweise verschiebbar ist.

7. Verfahren nach Anspruch 6, dadurch gekennzeichnet, daß mehrere Zugorgane (3', 4') an solchen Stellen eingewebt werden, daß sie bei flachgelegtem Band alle in einer Ebene liegen.

8. Verfahren nach einem der Ansprüche 6 oder 7, dadurch gekennzeichnet, daß der hohl gewobene Bandteil (2') entlang einem Zugorgan (3') abwechselnd geöffnet und geschlossen gewebt wird.

9. Verfahren nach einem der Ansprüche 6 bis 8, dadurch gekennzeichnet, daß das Zugorgan (3') durch den geöffneten Kantenbereich (16) des hohl gewobenen Bandteils (2') geführt wird.

10. Verfahren nach einem der Ansprüche 8 oder 9, dadurch gekennzeichnet, daß die Öffnungen entlang der Verbindungslinie (17) zwischen hohl gewobenem und nicht hohl gewobenem Bandteil (1') eingearbeitet werden.

11. Textilband zur Herstellung dekorativer Verpackungen, je für mehrere einzelne Gegenstände, gekennzeichnet durch mindestens zwei miteinander verbundene Textilbänder (2, 6 ; 3, 7, 4 ; 8, 5, 9), wobei mindestens ein Textilband (2, 3, 4, 5) hohl gewoben ist und wobei mit jedem hohl gewobenen Textilband (2, 3, 4, 5) ein weiteres Textilband (6, 7, 8, 9) verbunden ist, das von Fasermaterial und Webstruktur für eine Beschriftung oder Bedruckung geeignet ist oder eingearbeitete Zeichen oder Schriftzüge enthält.

12. Erzeugnis nach Anspruch 11, dadurch gekennzeichnet, daß zwei Textilbänder (3, 4) hohl gewoben sind und ein weiteres Textilband (7) in der Mitte liegt.

13. Erzeugnis nach Anspruch 11, dadurch gekennzeichnet, daß an das hohl gewobene Textilband (5) mindestens zwei Textilbänder (8, 9) angewoben sind.

14. Erzeugnis nach Anspruch 13, dadurch gekennzeichnet, daß mindestens zwei der angewobenen Textilbänder (8, 9) sich diametral gegenüberliegen.

15. Erzeugnis nach Anspruch 12, dadurch gekennzeichnet, daß das weitere Textilband (7) mindestens im mittleren Bereich (10) in Längsrichtung trennbar gestaltet ist.

16. Erzeugnis nach einem der Ansprüche 11 bis 13, dadurch gekennzeichnet, daß das oder die hohlen Textilbänder (2, 3, 4, 5) in Längsabständen (11) quer verklebt oder verschweißt sind.

17. Erzeugnis nach einem der Ansprüche 11 bis 16, dadurch gekennzeichnet, daß das oder die hohlen Textilbänder in Längsabständen (11) quer abgebunden oder vernäht sind.

18. Erzeugnis nach einem der Ansprüche 11 bis 17, dadurch gekennzeichnet, daß die Textilbänder (2, 3, 4, 5 ; 6, 7, 8, 9) der Länge nach verschweißt, verklebt, vernäht oder verwebt sind.

19. Erzeugnis nach einem der Ansprüche 11 bis 18, dadurch gekennzeichnet, daß in mindestens einem der Textilbänder (2', 1') in Längsrichtung ein Zugorgan (3' ; 4') vorgesehen ist, auf dem das Band wenigstens teilweise verschiebbar ist.

20. Erzeugnis nach Anspruch 19, dadurch gekennzeichnet, daß mehrere Zugorgane (3', 4') bei flachgelegtem Band alle in einer Ebene angeordnet sind.

21. Erzeugnis nach einem der Ansprüche 19 und 20, dadurch gekennzeichnet, daß das hohl gewobene Bandteil (2') entlang einem Zugorgan (3') in Abständen Öffnungen (18) aufweist.

22. Erzeugnis nach Anspruch 21, dadurch gekennzeichnet, daß die Öffnungen (18) entlang der Verbindung zwischen hohl gewobenem (2') und nicht hohl gewobenem Teil (1') vorgesehen sind.

23. Erzeugnis nach einem der Ansprüche 21 und 22 dadurch gekennzeichnet, daß die Öffnungen (18) abwechseind in sich gegenüberliegender Anordnung (Figur 7) vorgesehen sind.

24. Erzeugnis nach einem der Ansprüche 11 bis 23, dadurch gekennzeichnet, daß mindestens das Zugorgan (3' ; 4') als elastischer Faden ausgebildet ist oder elastische Fäden enthält.

25. Erzeugnis nach einem der Ansprüche 11 bis 24, gekennzeichnet durch die Abänderung, daß die Textilbänder (2-9) geraschelt oder gestrickt sind.

26. Erzeugnis nach einem der Ansprüche 11 bis 25, dadurch gekennzeichnet, daß die Zeichen oder Schriftzüge (12) auf dem Webstuhl, der Raschelmaschine oder auf der Strickmaschine direkt eingearbeitet sind.

27. Dekorative Verpackung mit einem Aufnahmebehälter für mehrere einzelne Gegenstände, dadurch gekennzeichnet, daß die Verpackung (14) aus durch Querteilung des Textilbandes (2, 6 ; 3, 7, 4 ; 8, 5, 9) nach mindestens einem der Ansprüche 11 bis 26 gewonnenen Einzelstücken erzeugt ist, wobei ein Ende (13) jedes hohl gewobenen Textilbandes (2, 3, 4, 5) dauerhaft verschlossen sein kann zur Erzeugung eines Aufnahmebehälters oder wobei das gewonnene Einzelstück über mindestens ein Zugorgan zu einem rosettenähnlichen Körper zur Erzeugung eines Aufnahmebehälters geformt ist.

28. Verpackung nach Anspruch 27, dadurch gekennzeichnet, daß die Verpackung mit Aufdruck versehen ist.

### Claims

1. Method for producing a decorative packaging made of textile ribbon for taking several individual objects, whereby the packaging contains a sack made of textile ribbon at least open on one side, characterized in that from at least two textile ribbons joined together (2, 6 ; 3, 7, 4 ; 8, 5, 9) at least one of which (2, 3, 4, 5) is woven hollow and at least the other (6, 7, 8, 9) is of a fibre material and woven structure suitable for lettering or printing or which contains symbols or letters, at least the ribbon woven hollow (2, 3, 4, 5) is glued, welded, tied or sewn in longitudinal sections (11) and behind these cross sections the whole ribbon is separated transversely.

2. Method according to claim 1 characterized in that at least two textile ribbons (3, 4) are woven hollow and are joined in longitudinal direction with a further ribbon (7).

3. Method according to claim 2 characterized in that the further ribbon (7) is divided in the central region (10) in longitudinal direction.

4. Method according to claim 1 characterized in that two ribbons (8, 9) diametrically opposed to each other are joined to the hollowly woven ribbon (5).

5. Method according to one of the claims 1 to 4 characterized in that the joining of the textile ribbons is achieved by welding, glueing, sewing or weaving.

6. Method according to one of the claims 1 to 5 characterized in that in at least one of the textile ribbons (2', 1') a drive medium (3', 4') is worked in in longitudinal direction, on which the ribbon is at least partly slidable.

7. Method according to claim 6 characterized in that more driving mediums (3', 4') are woven in at such places that they are on a level when the ribbon lies flat.

8. Method according to one of the claims 6 or 7 characterized in that the hollowly woven part of the ribbon (2') along the driving medium (3') is woven alternately open and closed.

9. Method according to one of the claims 6 to 8 characterized in that the driving medium (3') is guided through the open edge (16) of the hollowly woven part of the ribbon (2').

10. Method according to one of the claims 8 or 9 characterized in that the openings along the joining line (17) between the hollowly woven and not hollowly woven part of the ribbon (1') are worked in.

11. Textile ribbon for producing decorative packaging, each for several individual objects, characterized by at least two ribbons (2, 6 ; 3, 7, 4 ; 8, 5, 9) joined together, whereby at least one ribbon (2, 3, 4, 5) is woven hollow and whereby a further ribbon (6, 7, 8, 9) is joined to each hollowly woven ribbon (2, 3, 4, 5) which has a fibre material and woven structure suitable for lettering or printing or which contains symbols or letters.

12. Product according to claim 11 characterized in that two ribbons (3, 4) are woven hollow and a further ribbon (7) lies in the middle.

13. Product according to claim 11 characterized in that at least two ribbons (8, 9) are woven onto the hollowly woven ribbon (5).

14. Product according to claim 13 characterized in that at least two of the ribbons (8, 9) woven on are diametrically opposed.

15. Product according to claim 12 characterized in that the further ribbon (7) is separable in longitudinal direction in the central region (10).

16. Product according to one of the claims 11 to 13 characterized in that it or the hollow ribbons (2, 3, 4, 5) are glued or welded in longitudinal sections (11).

17. Product according to one of the claims 11 to 16 characterized in that it or the hollow ribbons are joined or sewn in longitudinal sections (11).

18. Product according to one of the claims 11 to 17 characterized in that the ribbons (2, 3, 4, 5 ; 6, 7, 8, 9) are welded, glued, sewn or woven lengthwise.

19. Product according to one of the claims 11 to 18 characterized in that in at least one of the ribbons (2', 1') a driving medium (3', 4') is provided in longitudinal direction on which the ribbon is at least partly slidable.

20. Product according to claim 19 characterized in that more driving mediums (3', 4') are arranged on one level when the ribbon lies flat.

21. Product according to one of the claims 19 and 20 characterized in that the hollowly woven part of the ribbon (2') has spaced openings (18) along a driving medium (3').

22. Product according to claim 21 characterized in that the openings (18) are provided along the joint between the hollowly woven (2') and not hollowly woven part (1').

23. Product according to one of the claims 21 and 22 characterized in that the openings (18) are provided in an alternately opposed arrangement (Figure 7).

24. Product according to claims 11 to 23 characterized in that at least one of the driving mediums (3', 4') is formed as an elastic thread or which has an elastic thread.

25. Product according to one of the claims 11 to 24 characterized in the change that the ribbons (2-9) are raschel warp knitted or knitted.

26. Product according to the claims 11 to 25 characterized in that the symbols or letters (12) are directly worked into the weaving machine, raschel warp knitting machine or knitting machine.

27. Decorative packaging with a container for taking several individual objects characterized in that the packaging (14) is made of single pieces won by cross-sectioning the ribbon (2, 6 ; 3, 7, 4 ; 8, 5, 9) according to at least one of the claims 11 to 26 whereby an end (13) of each hollowly woven ribbon (2, 3, 4, 5) can be permanently sealed to produce a container or, whereby the single piece produced is formed over at least one driving medium into a body resembling a rosette to produce a container.

28. Packaging according to claim 27 characterized in that the packaging is provided with a stamp.

## Revendications

1. Procédé pour fabriquer à partir d'une bande textile, un emballage décoratif destiné à recevoir plusieurs objets distincts, l'emballage comportant un petit sac formé dans la bande textile et ouvert au moins d'un côté, caractérisé en ce que l'on utilise au moins deux bandes textiles (2, 6 ; 3, 7, 4 ; 8, 5, 9) reliées ensemble, dont au moins une (2, 3, 4, 5) est tissée en creux et dont au moins une autre (6, 7, 8, 9), en matériau fibreux et à structure tissée, convient pour une inscription ou une impression ou bien contient des caractères ou des signatures intégrés ; étant précisé que l'on colle, que l'on soude, que l'on ferme d'un fil ou que l'on coud transversalement, à intervalles longitudinaux (11), au moins la bande tissée en creux (2, 3, 4, 5) et que l'on divise transversalement l'ensemble de la bande derrière ces subdivisions transversales.

2. Procédé selon la revendication 1, caractérisé en ce que l'on tisse en creux au moins deux bandes textiles (3, 4) et qu'on les réunit en direction longitudinale à une seconde bande textile (7) située entre elles.

3. Procédé selon la revendication 2, caractérisé en ce que l'on divise la seconde bande textile (7) dans la zone médiane (10) selon la direction longitudinale.

4. Procédé selon la revendication 1, caractérisé en ce que l'on réunit à la bande textile (5) tissée en creux deux bandes (8, 9) placées dans des positions diamétralement opposées.

5. Procédé selon l'une des revendications 1 à 4, caractérisé en ce que l'on réalise la liaison des rubans textiles (2, 6 ; 3, 7, 4 ; 8, 5, 9) entre eux par soudage, collage, couture ou entrelaçage.

6. Procédé selon l'une des revendications 1 à 5, caractérisé en ce que, dans au moins l'une des bandes textiles (2', 1'), on insère en direction longitudinale un cordon de tirage (3' ; 4') sur lequel la bande peut au moins partiellement coulisser.

7. Procédé selon la revendication 6, caractérisé en ce que l'on insère au tissage plusieurs cordons de tirage (3', 4') en des endroits tels que, lorsque la bande est posée à plat, ils se trouvent tous dans un même plan.

8. Procédé selon l'une des revendications 6 ou 7, caractérisé en ce que la portion de bande (2') tissée en creux est alternativement ouverte et fermée au tissage le long d'un cordon de tirage (3').

9. Procédé selon l'une des revendications 6 à 8, caractérisé en ce que le cordon de tirage (3') passe par la zone de bordure ouverte (16) de la portion de bande (2') tissée en creux.

10. Procédé selon l'une des revendications 8 ou 9, caractérisé en ce que les ouvertures sont réalisées le long de la ligne de liaison (17) entre la portion de bande tissée en creux et la portion de bande (1') non tissée en creux.

11. Bande textile pour la fabrication d'emballages décoratifs, chacun pour plusieurs objets distincts, caractérisée par au moins deux bandes textiles (2, 6 ; 3, 7, 4 ; 8, 5, 9) réunies l'une à l'autre, étant précisé qu'au moins une bande textile (2, 3, 4, 5) est tissée en creux et qu'à chaque bande textile tissée en creux (2, 3, 4, 5), est réunie une autre bande textile (6, 7, 8, 9), en matériau fibreux et à structure tissée, qui convient pour une inscription ou une impression ou qui contient des caractères ou des signatures intégrés.

12. Produit selon la revendication 11, caractérisé en ce que deux bandes textiles (3, 4) sont tissées en creux et en ce qu'une seconde bande textile (7) se trouve au milieu.

13. Produit selon la revendication 11, caractérisé en ce qu'à la bande textile (5) tissée en creux, sont réunies par tissage au moins deux bandes textiles (8, 9).

14. Produit selon la revendication 13, caractérisé en ce qu'au moins deux des bandes textiles (8, 9) réunies par tissage sont placées dans des positions diamétralement opposées.

15. Produit selon la revendication 12, caractérisé en ce que la seconde bande textile (7) est conçue de façon à pouvoir être divisée dans la direction longitudinale, au moins dans la zone médiane (10).

16. Produit selon l'une des revendications 11 à 13, caractérisé en ce que la bande textile ou les bandes textiles (2, 3, 4, 5) creuses sont collées ou soudées transversalement, à intervalles longitudinaux (11).

17. Produit selon l'une des revendications 11 à 16, caractérisé en ce que la bande textile ou les bandes textiles creuses sont transversalement fermées d'un fil ou cousues, à intervalles longitudinaux (11).

18. Produit selon l'une des revendications 11 à 17, caractérisé en ce que les bandes textiles (2, 3, 4, 5 ; 6, 7, 8, 9), sont soudées, collées, cousues ou entrelacées, dans le sens de la longueur.

19. Produit selon l'une des revendications 11 à 18, caractérisé en ce que, dans au moins l'une des bandes textiles (2', 1'), est prévu, en direction longitudinale, un cordon de tirage (3' ; 4') sur lequel la bande peut au moins partiellement coulisser.

20. Produit selon la revendication 19, caractérisé en ce que, lorsque la bande est posée à plat, plusieurs cordons de tirage (3', 4') sont tous disposés dans un même plan.

21. Produit selon l'une des revendications 19 et 20, caractérisé en ce que la portion de bande (2') tissée en creux présente, le long d'un cordon de tirage (3'), des ouvertures (18) distantes l'une de l'autre.

22. Produit selon la revendication 21, caractérisé en ce que les ouvertures (18) sont prévues le long de la liaison entre la portion (2') tissée en creux et la portion (1') non tissée en creux.

23. Produit selon l'une des revendications 21 et 22, caractérisé en ce que les ouvertures (18) sont formées en alternance dans des formations disposées l'une en face de l'autre (figure 7).

24. Produit selon l'une des revendications 11 à 23, caractérisé en ce qu'au moins le cordon de tirage (3' ; 4') est conçu sous forme de fil élastique ou bien contient des fils élastiques.

25. Produit selon l'une des revendications 11 à 24, caractérisé par la variante selon laquelle les bandes textiles (2-9) sont fabriquées sur métier Raschel ou sur métier à tricoter.

26. Produit selon l'une des revendications 11 à 25, caractérisé en ce que les caractères ou les signatures (12) sont directement insérés sur le métier à tisser, le métier Raschel ou le métier à tricoter.

27. Emballage décoratif comportant un logement pour recevoir plusieurs objets individuels, caractérisé en ce que l'emballage (14) est produit à partir de tronçons individuels par division transversale de la bande textile (2, 6 ; 3, 7, 4 ; 8, 5, 9) selon au moins l'une des revendications 11 à 26, étant précisé qu'une extrémité (13) de chaque bande textile (2, 3, 4, 5) tissée en creux peut être obturée de façon permanente pour définir un logement de réception, ou bien que le tronçon individuel obtenu est, au moyen d'au moins un cordon de tirage, mis sous la forme d'un corps similaire à une aumônière pour donner un logement de réception.

28. Emballage selon la revendication 27, caractérisé en ce que l'emballage est muni d'une impression.

**0 208 804**

Zeichnung 1

Zeichnung 2

Zeichnung 3

Nella
Marco

1.7. 85

Zeichnung 4

FIG. 5

FIG. 6

FIG. 7